# EUROPEAN PATENT APPLICATION

(11) **EP 1 473 899 A1**
(43) Date of publication of application: **03.11.2004**
(21) Application number: 03388027.9
(22) Date of filing: 28.04.2003
(51) Int. Cl.: H04L 29/06, H04L 12/46, H04L 12/56

(54) **Security in a communications network**

(71) Applicant: Telefonaktiebolaget LM Ericsson (publ), 164 83 Stockholm (SE)
(72) Inventor: Gehrmann, Christian, 222 29 Lund (SE); Persson, Mauritz Joakim, 224 72 Lund (SE)
(74) Representative: Boesen, Johnny Peder

(57) **Abstract**

Disclosed is a method of establishing a secured peer-to-peer communication between two communications devices, each communications device having stored a respective set of previously established security associations with other communications devices. The method comprises determining whether the two communications devices have a common security association in their respective sets of established security associations; if the devices have determined a common security association, protecting the communications link between the two communications device based on the determined common security association; otherwise establishing a new security association between the two communications devices, and protecting the communications link based on the new security association; and extending the sets of previously established security associations of the two communications devices to the corresponding other communications device by exchanging corresponding key data.

## Description

### FIELD OF THE INVENTION

The present invention relates to the establishment of secured peer-to-peer communication between communications devices.

### BACKGROUND OF THE INVENTION

The fast growth of short-range wireless technologies has created the possibility of providing local connectivity between personal communications devices within the proximity of the user.

Today, so-called ad hoc networks are used more and more frequently. Typically, an ad hoc network between communications devices is established temporarily for a special purpose. There is no fixed infrastructure, and the communications devices constituting the nodes of the network are often mobile and use radio links. An ad hoc network may constitute dynamic wide area connectivity in situations such as military operations, rescue and recovery operations, and remote construction sites. An ad hoc network may also constitute local area connectivity in situations such as temporary conference sites, home networks and robot networks. An ad hoc network may also constitute personal area networks in situations such as interconnected accessories, ad hoc conference table and games. The nodes may consist of e.g. mobile phones, laptops, television sets, washing machines, or the like.

Bluetooth is a well-known technology that enables the establishment of ad-hoc networks. Other examples of technologies upon which ad-hoc networks may be based include wireless LAN technology, e.g. IEEE 802.11 b.

In many situations, e.g. in military operations or business conferences when the communication between the nodes comprises secrets, it is very important that the communication services are secure. In general a secure communications service should provide the possibility of creating security associations between the different communications devices.
In general, a security association between communications devices comprises a shared secret between the devices or shared trusted keys, thereby providing a mechanism to obtain a trust relation between two devices. The shared secret or the shared trusted keys may be combined with other information, e.g. information about a trusted third party.

Based on the security association between communications devices it is possible to authenticate other communications devices and/or to provide confidentiality and/or integrity protection of the communication between devices.

If a security association between two devices is based on a symmetric secret key, both devices store the same secret key, which is used to encrypt and decrypt the messages communicated between the devices. Hence, the sending device may rely on that a message encrypted with the symmetric key can only be read by a receiver knowing the symmetric key. The receiver may rely on that a message that can successfully be decrypted with the symmetric key originates from a sender who knows the symmetric key and that the message has not been tampered with during transmission. Examples of symmetric-key based security associations include the security associations described in the Bluetooth specification ("The Specification of the Bluetooth System, Core, Baseband Specification", version 1.1, December 2000, by the Bluetooth Special Interest Group) and the security associations used in the IP Security Protocol (lPsec).

In a public key infrastructure (PKI) system, two corresponding, so-called asymmetric, keys are used to protect information. Information which is encrypted with one of the two keys can be decrypted only with the other key.

In some PKI systems either of the two keys can be used to encrypt and the other to decrypt. In other systems, one key must be used only for encryption and the other for decryption. One important feature of PKI systems is that it is computationally unfeasible to use knowledge of one of the keys to deduce the other key. In a typical PKI system, each of the systems possesses a set of two such keys. One of the keys is maintained private while the other is freely published. If a sender encrypts a message with the recipient's public key, only the intended recipient can decrypt the message, since only the recipient is in possession of the private key corresponding to the published public key. If the sender, before performing the above encryption, first encrypts the message with the senders private key, the recipient, upon performing first a decryption, using the recipient's private key, then a decryption on the result, using the sender's public key, is assured not only of privacy but of authentication since only the sender could have encrypted a message such that the sender's public key successfully decrypts it.

Public key infrastructures provide for a digital certificate that can identify an individual or an organization and directory services that can store and, when necessary, revoke the certificates. The sender of a message may be authenticated using the certificate and the public key included in the certificate. This is possible, if the receiver trusts the party who has issued and securely signed the certificate, i.e. the so-called Certificate Authority (CA). Furthermore, the public key in the certificate may be used directly or indirectly for key exchange purposes. Certificates in turn may also be authenticated by another certificate, thereby creating a hierarchy of certificates, a so-called certificate chain.

Examples of public key security mechanisms include the Diffie-Hellman key exchange, RSA encryption/decryption and Elliptic Curve public key techniques.

The creation of a security association between two communications devices, the so-called security initialisation procedure, may be performed in several ways: For example, a user may enter a secret value into the two devices. Alternatively, the devices may be equipped with a secret key and a unique identity during manufacturing or as a part of a personalisation process; the secret key may be stored in some other device or network server. Alternatively, the devices are equipped with respective sets of trusted public keys during manufacturing or as a part of a personalisation process; all certificates or chain of certificates signed with a secret key corresponding to a public key of the set of trusted public keys are trusted by the corresponding device, and security associations are created based on trusted certificates.

In many applications, it is an ordinary user who configures a security association. Hence, it is important that it is possible to create security associations in a fast and user-friendly manner.

For example, in Bluetooth, security associations between two devices are created by a so-called pairing or bonding procedure during which a user is asked to enter the same secret passkey or PIN into both devices. Based on this passkey, the two devices perform a key exchange resulting in a shared secret, the so-called link key, which is stored in both devices.

Hence, in order to set up security associations for n devices, a user needs to enter a passkey for each pair of devices, i.e. n(n-1 )/2 pairs. This is a cumbersome and time consuming procedure.

International patent application WO 01/31836 describes a method of establishing security in an ad hoc network. According to this method trust groups are established in which all nodes of a trust group have mutual trust relations with each other and where the trust relations are based on trusted public keys. If a new node is a candidate node for joining a trust group, a certain node of the trust group, the so-called x-node, is identified which has an existing trust relation with the candidate node. The x-node distributes trust reiations between the members of the trust group and the candidate node.

It is a problem of the above prior art method that it is limited to group communications scenarios in which a trust relation is to be established with a group of other devices. Hence, there is a need for a method of establishing secured peer-to-peer communication between two communications devices, i.e. communications scenarios in which each communications device has equivalent capabilities and responsibilities and is not necessarily aware of a certain trust group.

### SUMMARY OF THE INVENTION

The above and other problems are solved by a method of establishing a secured peer-to-peer communication between a first and a second communications device via a communications link, each communications device having stored a respective set of previously established security associations between the corresponding communications device and other communications devices; the method comprising
- determining whether the first and second communications devices have a common security association in their respective sets of established security associations;
- if the first and the second communications device have determined a common security association, protecting said communications link between the first and second communications device based on the determined common security association; otherwise establishing a new security association between the first and second communications devices, and protecting the communications link based on the new security association; and
- extending the sets of previously established security associations of the first and second communications devices to the corresponding other one of the first and second communications devices by communicating corresponding key data via the protected communications link.

Hence, when two communications devices are connected for the first time via a communications link, they determine whether they have a previously established security association in common; if such a previously established security association exists, it is used as a basis for protecting the communications link between the two devices; otherwise a new security association, preferably a shared secret, is established based on a key exchange protocol to protect the communications link. Preferably, the key-exchange protocol is password authenticated and requires a user to enter a password in at least one of the devices. The two devices then exchange key data related to their respective previously established security associations, thereby extending or propagating these previously security associations to the corresponding other device.

Consequently, a mechanism is provided which allows each device to establish a security association with other devices and to propagate its security associations to the other device, i.e. the security mechanism is independent of the presence of any master device, certificate server, or the like.

Hence, an efficient and secure method of trust delegation is provided, i.e. a mechanism for the propagation of security associations among devices, e.g. devices of a personal area network, via new pairings among those devices.

It is a further advantage that the number of pairings which require user interaction may be reduced. In order to establish mutual security associations for n devices, the method according to the invention reduces the number of pairings which require user interaction to a number between n-1 and n(n-1 )/2, depending on the order in which the devices are paired.

It is a further advantage of the invention that it provides a simple and user-friendly method of creating security associations.

It is a further advantage of the invention that it provides a security initialisation procedure that is applicable for security associations based on symmetric keys as well as security associations based on asymmetric keys.

The protection of the communications link between the two devices based on the determined common security association may include any suitable cryptographic mechanism. In one embodiment, the two devices perform an authenticated key exchange, i.e. a protocol assuring to the communicating parties that they know each other's true identities and providing them with a shared secret key known only to them. The authenticated key exchange is performed based on the determined common security association, i.e. the common security association is used to provide the assurance that the parties know each other's true identities. The shared secret key is subsequently used to provide privacy, data integrity, or both.

In one embodiment, the step of establishing a new security association between the first and second communications devices comprises receiving a user-input by at least one of the first and second communications devices, the user-input indicating whether the corresponding other communications device is a trusted device; and wherein the step of extending said set of previously established security association is only performed if the received user-input has indicated the corresponding other communications device to be a trusted device.

Hence, the propagation of security associations is limited to trusted devices, i.e. the propagation to new devices is dependant on a user approval, thereby preventing a propagation of security associations in an un-controllable manner and, thus, increasing the security of the system. The user-input may be received in any suitable form, e.g. via a keyboard or any other input device, e.g. in response to prompting the user for an approval. Alternatively, the user input may be part of a customisation setting of the device providing certain rules as to which devices or types of devices to trust.

In another embodiment, each previously established security association of the set of previously established security associations of one of the first and second communications devices is stored in relation to a group identifier identifying a predetermined group of communications devices; and wherein the step of extending the previously established security associations is limited to previously established security associations related to a predetermined group identifier.

Hence, the propagation of security associations may be limited to a certain context, e.g. a certain service, a certain type of devices, etc. This limitation further increases the security of the method as the propagation of security associations is prevented to continue unlimited without user-control. Furthermore, a single communications device may have independent groups of security associations which should not be mixed. For example, a device may have security associations with devices on a local wireless LAN, e.g. computers and other devices at a company. In connection with a business conference, the device may establish another group of security associations with other devices participating in the business conference, but the security association related to the local wireless LAN should not be extended to the other participants of the business conference. Hence, by limiting the propagation of security associations to a predetermined group context, a flexible and secure mechanism is provided. In the following, the keys intended to be propagated to other devices will also be referred to as trusted keys.

Further preferred embodiments are disclosed in the dependant claims.

The present invention can be implemented in different ways including the method described above and in the following, a communications system, and further product means, each yielding one or more of the benefits and advantages described in connection with the first-mentioned method, and each having one or more preferred embodiments corresponding to the preferred embodiments described in connection with the first-mentioned method and disclosed in the dependant claims.

According to one aspect, the above problems are solved by a communications device facilitating peer-to-peer communication with other such communications devices of a communications system, the communications device comprising storage means for storing a set of previously established security associations between the corresponding communications device and other communications devices; communications means for communicating via a communications link with another communications device; and processing means adapted to perform the following steps
- determining whether the communications device has a common security association in the set of established security associations, the common security association corresponding to a security association of the another communications device;
- if the communications device has determined a common security association, protecting the communications link based on the determined common security association; otherwise establishing a new security association with the another communications device, and protecting the communications link based on the new security association; and
- extending the set of previously established security associations to the another communications device by communicating corresponding key data via the protected communications link.

The term communications device is intended to comprise any electronic equipment comprising communications means for communicating with other such communications devices in a wired or wireless manner. In particular, the term communications device comprises all portable radio communication equipment and other handheld or portable communications devices. The term portable radio communication equipment inciudes aii equipment such as mobile telephones, pagers, communicators, i.e. electronic organisers, smart phones, personal digital assistants (PDAs), handheld computers, portable computers, laptops, or the like.

Correspondingly, the term communications means is intended to comprise any circuit or device allowing the transmission and reception of data via a wired or wireless communications link to/from another communications device. For example, the communications means may include a radio transmitter and receiver. Further examples of communications means include transmitters/receivers using other wireless technology, such as infrared communications, or the like.

The term storage means is intended to comprise any suitable arrangement or device for data storage, for example an electrically erasable programmable read only memory (EEPROM), flash memory, erasable programmable read only memory (EPROM), a random access memory (RAM), magnetic storage, such as a hard disk, or the like. The storage means may be an integrated part of the electronic device, or it may be connected to said device, e.g. removably inserted. For example, the storage means may be a removable storage medium, e.g. a memory card, a PCMCIA card, a smart card, or the like.

The term processing means is intended to comprise any suitably programmed general- or special-purpose programmable microprocessors, Digital Signal Processors (DSP), Application Specific Integrated Circuits (ASIC), Programmable Logic Arrays (PLA), Field Programmable Gate Arrays (FPGA), etc., or a combination thereof.

It is understood that the features of the method described above and in the following may be implemented in software and carried out in a processing means caused by the execution of computer-executable instructions. The instructions may be program code means loaded in a memory, such as a RAM, from a storage medium, such as a ROM, flash memory, EPROM, EEPROM, or the like, or from another computer via a computer network.

Alternatively, the described features may be implemented by hardwired circuitry instead of software or in combination with software.

### BRIEF DESCRIPTION OF THE DRAWINGS

The above and other aspects of the invention will be apparent and elucidated from the embodiments described in the following with reference to the drawing in which:
fig. 1 shows a block diagram of a communications device;
fig. 2 shows a flow diagram illustrating the establishment of a secured peer-to-peer communications link between two communications devices using symmetric-key based security associations;
figs. 3a-e illustrate an example of the method of fig. 2 in a scenario with four devices;
fig. 4 illustrates the establishment of a secured peer-to-peer communications link between two communications devices using public-key based security associations;
figs. 5a-e illustrate a first example of a pairing scenario for pairing five communications devices; and
figs. 6a-f illustrate a second example of a pairing scenario for pairing five communications devices.

### DETAILED DESCRIPTION OF THE PREFERRED EMBODIMENTS

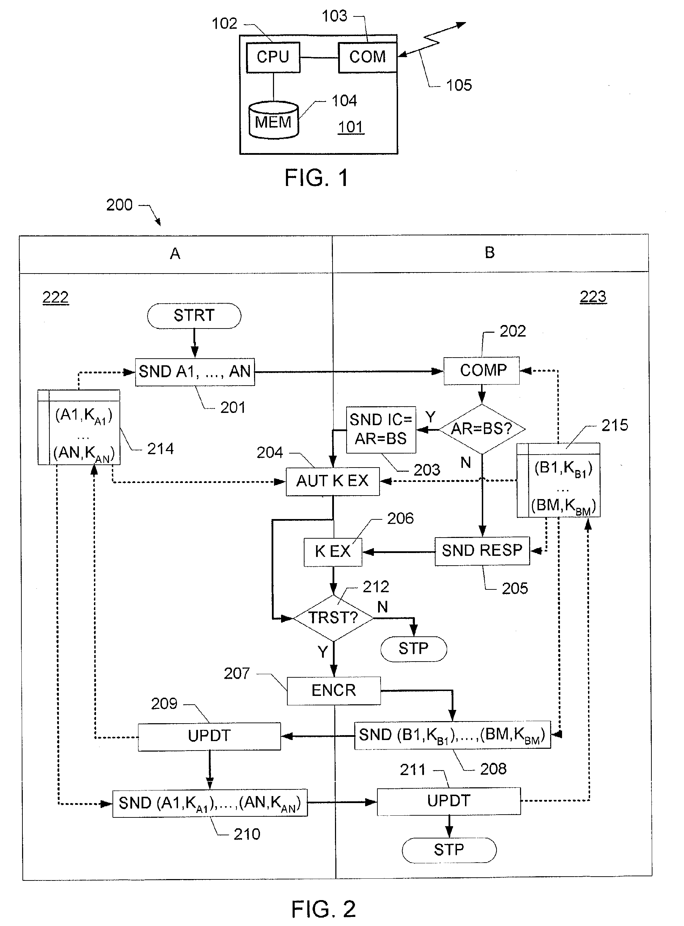

Fig. 1 shows a block diagram of a communications device. The communications device 101 comprises a processing unit 102, a radio communications unit 103 connected to the processing unit, and a storage medium 104 connected to the processing unit.

The radio communications unit 103 transmits the data received from the processing unit 102 via the radio channel 105 employed by the communications network, and receives data from the radio channel and forwards them to the processing unit. For example, the radio communications unit 103 may be based on the Bluetooth technology and transmit/receive in the ISM band at 2.45 GHz. In one embodiment, the communications network is a Bluetooth piconet.

The processing unit 102 processes the data received from other devices and the data to be sent to other devices according to the functionality implemented by the communications device. In particular, the processing unit is suitably programmed to perform the security functions described below, such as performing a key exchange with another device, performing an authenticated key exchange with another device, protecting the data communicated to/from other devices, e.g. integrity protection, encryption, authentication, etc., and the propagation of security associations to other devices.

The storage medium 104, e.g. an EPROM, EEPROM, flash memory, a hard disk, or the like, has stored thereon a set of security associations, e.g. as a list of private keys or a list of public keys. The set may be suitably indexed, and each entry may comprise additional information, e.g. a group identifier, a validity period, or the like.

It is noted that the communications device may comprise further components which have been omitted in the schematic block diagram of fig. 1. For example, the communications device may further comprises an automatic gain control (AGC) unit connected to the receiver, a decoder, an encoder, or the like.

Fig. 2 shows a flow diagram illustrating the establishment of a secured peer-to-peer communications link between two communications devices using symmetric-key based security associations. The flow diagram 200 comprises two columns 222 and 223, each column representing one of the two communications devices A and B that communicate with each other. Boxes representing steps performed by a device A are placed in column 222 while boxes representing steps performed by device B are placed in column 223. Boxes representing steps performed by both devices cooperatively cover both columns.

Each of the communications devices A and B comprises an internal database of trusted private keys. Since these keys may be distributed to a number of trusted devices, as described below, these private keys will also be referred to as (trusted) group keys. The databases 214 and 215 each comprise a list of trusted group key records, where each record includes a group key index and a trusted group key corresponding to the index. In the example of fig. 2, the trusted group keys stored in database 214 of device A are denoted K_{A1},...,K_{AN}, and the corresponding indices are denoted A1,...,AN. Correspondingly, the trusted group keys stored in database 215 of device B are denoted K_{B1}, ...,K_{BM}, and the corresponding indices are denoted B1,...,BM. For example, during manufacturing, each device may be pre-configured with at least one key index and a corresponding group key. Alternatively, the device is shipped with no pre-configured keys. It is further understood that the devices may have stored further keys for other purposes. However, the present method applies to a dedicated set of trusted group keys K_{A1},...,K_{AN} and K_{B1},...,K_{BM}, respectively, which are intended to be propagated to other trusted devices as a part of the present method. For example, the keys K_{A1}, ...,K_{AN} and K_{B1}, ...,K_{BM}, may be stored in dedicated databases, respectively, or otherwise separated from other keys. Alternatively, they may be stored in a database together with other keys, where the trusted group keys intended for the present method are marked as trusted keys intended for the present method. As mentioned above, each of the trusted group keys may be related to a group identifier identifying a specific context, e.g. group o devices, services, or the like, and where the propagation of the corresponding key is limited to that context.

In one embodiment, the key indices may be chosen at random from a predetermined index space. Preferably, the index space is selected large enough to reduce the probability of two different secret keys having the same index. For example, the indices may be selected from a 48-bit index space. It is noted, however, that uniqueness is not a strict requirement for the indices, as they are only used to identify common group keys. If two different keys are erroneously indicated as a common key due to a conflict of their indices, the subsequent establishment of security functions, such as encryption, based on these keys will fail. Hence, in this case an alternative key may be identified or, a manual pairing may be performed.

In the following, the communications devices are assumed to be capable of communicating with each other via a wired or wireless communications medium, e.g. a cable, a radio channel or any other suitable technology. For example, the devices may communicate using a Bluetooth air interface. When a user would like to connect the two devices A and B for the first time, i.e. the two devices have not previously been in contact with each other, the following steps are performed:

In the initial step 201, device A sends the list of key indices A1,...,AN stored in the database 214 of device A to device B.

In step 202, device B compares the received list of indices with the indices B1,...,BM stored in database 215 of device B. If device B identifies a common index, denoted IC, i.e. if there is an IC ∈ {A1,...,AN} ∩ {B1....BM}, the process continues at step 203, otherwise the process continues at step 205. If device B identifies more than one common key index, an arbitrary one of the common indices is selected.

In step 203, i.e. if a common index IC was identified in step 202, device B sends the common index IC to device A.

In subsequent step 204, the two devices perform an authenticated key exchange resulting in a shared secret. The authentication is based on the common trusted group key K_{IC} that corresponds to the identified common index IC. The authenticated key exchange may be performed according to any suitable known authenticated key exchange process. In one embodiment, the authenticated key exchange is performed according to the Bluetooth specification, where the common group key K_{IC} is used as PIN or initial key. See for example "The Specification of the Bluetooth System, Core, Baseband Specification", version 1.1, December 2000, by the Bluetooth Special Interest Group. Other examples of authenticated key exchanges include an authenticated Diffie-Hellman key exchange. After completion of the authenticated key exchange, the process continues at step 207.

In step 205, i.e. if no common key index was identified in step 202, the device B informs device A that no common key index was identified, e.g. by sending a corresponding response message or by sending a request for manual pairing.

In subsequent step 206, a key exchange is performed resulting in a shared secret. In one embodiment, the key exchange is initiated by device A, e.g. by sending a request for performing a pairing of the two devices. In one embodiment, the user is prompted for acceptance and, depending on the user's input, the request for pairing is accepted or rejected. If device B rejects the request, the process is terminated; otherwise, a pairing process including a key exchange is performed by the two devices. As part of the key exchange, a user interaction is requested by the devices. For example, the user(s) in control of the devices is/are asked to enter a passcode in both devices. In an alternative embodiment, a passcode is generated by one device and displayed to the user, and the user is asked to enter the generated passcode into the other device. The key exchange may be performed according to any suitable known password-based key exchange process. In one embodiment, the key exchange is performed according to the Bluetooth specification ("The Specification of the Bluetooth System, Core, Baseband Specification", ibid.).

As part of the key exchange process, the user is asked whether the devices A and B should proceed with the exchange of their respective security associations, i.e. whether the respective other device is regarded as a highly trusted device (step 212). If the user rejects the exchange of security associations, the process is completed, i.e. in this case, the two devices are paired and have established a shared secret, but without extending their previously established security associations to the respective other device. For example, the established shared secret may be used to protect the subsequent communication between the two devices, e.g. by establishing encryption and/or integrity protection and/or the like. In one embodiment, the exchange of security association may be limited to a certain group of security associations. For example, in an embodiment where each group key record further comprises a group identifier, the user may be asked to enter or select from a list one or more group identifiers. Subsequently, only security associations of the selected group identifiers are exchanged. If the user accepts the exchange of at least some security associations after completion of the key exchange step, the process continues at step 207.

In step 207, i.e. once a shared secret is established between the devices, either by an authenticated key exchange in step 204 authenticated by an existing common key K_{IC}, or a passcode-based key-exchange in step 206 involving a user interaction, the devices switch to an encrypted connection using the agreed shared secret. The encryption may be based on any suitable encryption algorithm, such as SAFER+, AES, DES, RC5, Bluetooth E0, GSM A5/3, etc. In one embodiment, the communication between the devices is further integrity protected.

In step 208, device B sends a list of trusted group keys and corresponding indices stored in the database 215 to device A. Since device B has previously received a list of key indices from device A, in one embodiment, device B may send only indices and corresponding keys from database 215 with indices different from those previously received, thereby reducing the required communications resources. If the set of trusted group keys was limited to only comprise group keys related to one or more certain group identifier, only keys related to the selected group identifiers) are sent. If device B has no trusted group keys stored in its database 215, e.g. because the device was shipped without any key and has not previously exchanged trusted keys with another device, device B generates a group key and a corresponding index. For example, both the key and the index may be generated randomly from suitable respective spaces.

In step 209, device A updates the list of trusted keys in database 214 with the received list of keys and corresponding indices.

In step 210, device A sends a list of its trusted keys and corresponding indices stored in the database 214 to device A. In one embodiment, device A sends only indices and corresponding keys from database 214 with indices different from those received from device B, thereby reducing the required communications resources.

In step 211, device B updates the list of trusted keys in database 215 with the received list of keys and corresponding indices.

It is understood that, in an alternative embodiment, the order of steps 208-211 may be changed, e.g. such that device A sends its list of group keys first, before receiving the corresponding list of device B.

Hence, in the above, a procedure for establishing a security association between the devices A and B based on symmetnc keys was disclosed in which previously established security associations are propagated to the respective other device. Consequently, the number of pairings that require a passcode entered by a user is reduced.

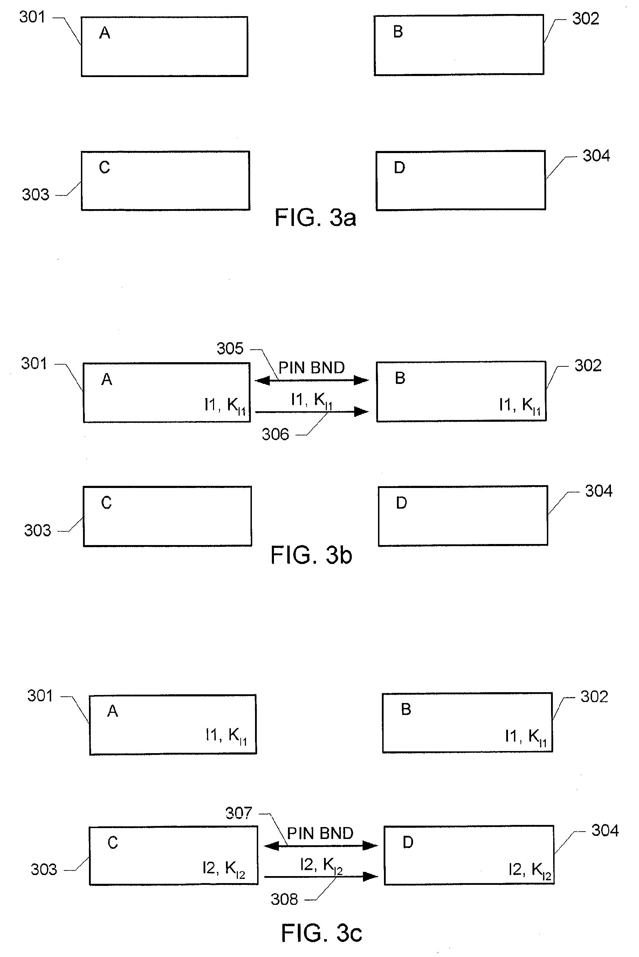

Figs. 3a-e illustrate an example of the method of fig. 2 in a scenario with four communications devices. In this example, it is assumed that one or more users wish to establish security associations among four communications devices A, B, C, and D, generally designated 301, 302, 303, and 304, respectively.

Fig. 3a illustrates the initial situation. In this example, it is assumed that none of the devices 301-304 is pre-configured with any group keys, i.e. none of the devices has any group keys stored in their respective lists of group keys.

Fig. 3b illustrates a first pairing step between devices 301 and 302. Devices 301 and 302 are connected for the first time and none of the devices has stored a group key. Hence, they perform a manual pairing based on a PIN or password entered into both devices, as illustrated by arrow 305. The user(s) of both devices indicate(s) to the respective device via a suitable user-input that this pairing is a pairing with a highly trusted device, i.e. the user(s) initiate(s) the exchange of group keys. Consequently, after authentication and switching to encryption, one of the devices (device 301) generates a trusted group key K_{I1} with index l1, and sends the generated key and index to the other device (device 302), as indicated by arrow 306. Both devices store the trusted group key K_{I1} and the corresponding index l1 in their respective databases.

Fig. 3c illustrates the situation during a subsequent connection of devices 303 and 304. Again, devices 303 and 304 are connected for the first time, and none of the devices has stored a group key. Hence, they perform a manual pairing based on a PIN or password entered into both devices, as illustrated by arrow 307. The user(s) of both devices indicate(s) to the respective device via a suitable user-input that this pairing is a pairing with a highly trusted device, i.e. the user(s) initiate(s) the exchange of group keys.

After authentication and encryption, one of the devices (device 303) generates a trusted group key K_{I2} with index I2, and sends the generated key and index to the other device (device 304), as indicated by arrow 308. Both devices store the trusted group key K_{I2} and the corresponding index l2 in their respective databases.

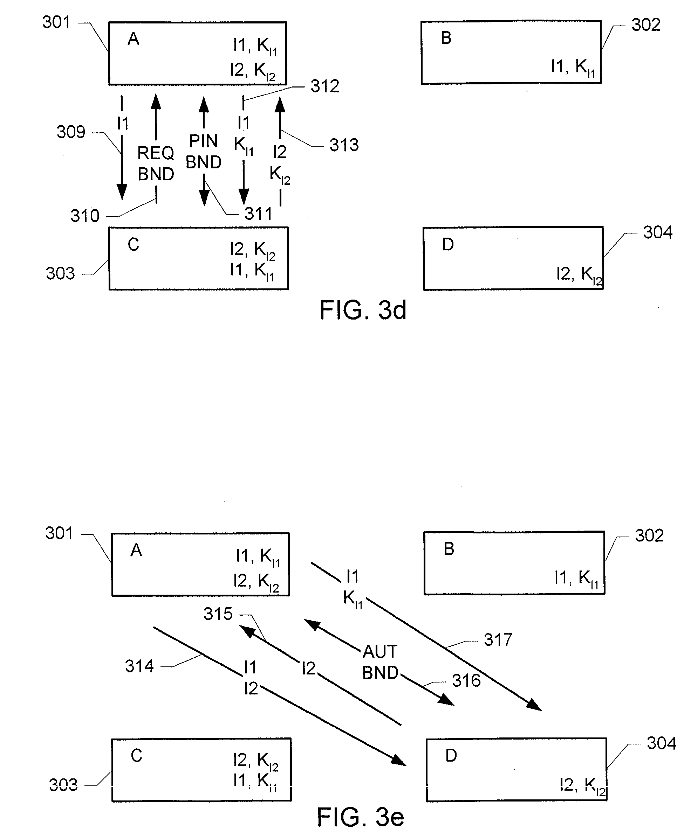

Fig. 3d illustrates the situation during a subsequent connection of devices 301 and 303. The devices 301 and 303 are connected with each other for the first time. Since device 301 has already stored the trusted key Kₗ₁, it sends the corresponding index l1 to device 303, as illustrated by arrow 309. Since device 303 does not have a key with index l1 stored in its database, it replies with a request for pairing (arrow 310). The devices perform a manual pairing based on a PIN or password entered into the two devices, as indicated by arrow 311. The user(s) of both devices indicate(s) to the respective device via a suitable user-input that this pairing is a pairing with a highly trusted device, i.e. the user(s) initiate(s) the exchange of group keys. After authentication and switching to encryption, device 301 sends its list of trusted group keys, i.e. key K_{I1} and corresponding index I1, to device 303 (arrow 312). Device 303 replies with its list of trusted group keys, i.e. key K_{I2} and corresponding index l2 (arrow 313). Both devices store the respective new key in their respective databases.

Fig. 3e illustrates the situation during a subsequent connection of devices 301 and 304. The devices 301 and 304 are connected with each other for the first time. Device 301 sends its list of group key indices, i.e. indices 11 and l2, to device 304, as illustrated by arrow 314. Device 304 has a key with index l2 stored in its database and replies with the key index l2 (arrow 315), thereby requesting an authenticated key exchange using the common key with index l2. The devices perform an authenticated key exchange based on the common key Kₗ₂ (arrow 316). After authentication and switching to encryption, the devices exchange their respective list of group keys: Device 301 sends the trusted group key K_{I1} and the corresponding index l1 to device 304 (arrow 317). Device 301 does not need to send the key Kₗ₂, since this key has already been identified as a common key. Device 304 stores the received key K_{I1} and the corresponding index l1 in its database. Device 304 does not have any additional keys stored in its database that are not already known to device 301. Hence, no key is sent from device 304 to device 301.

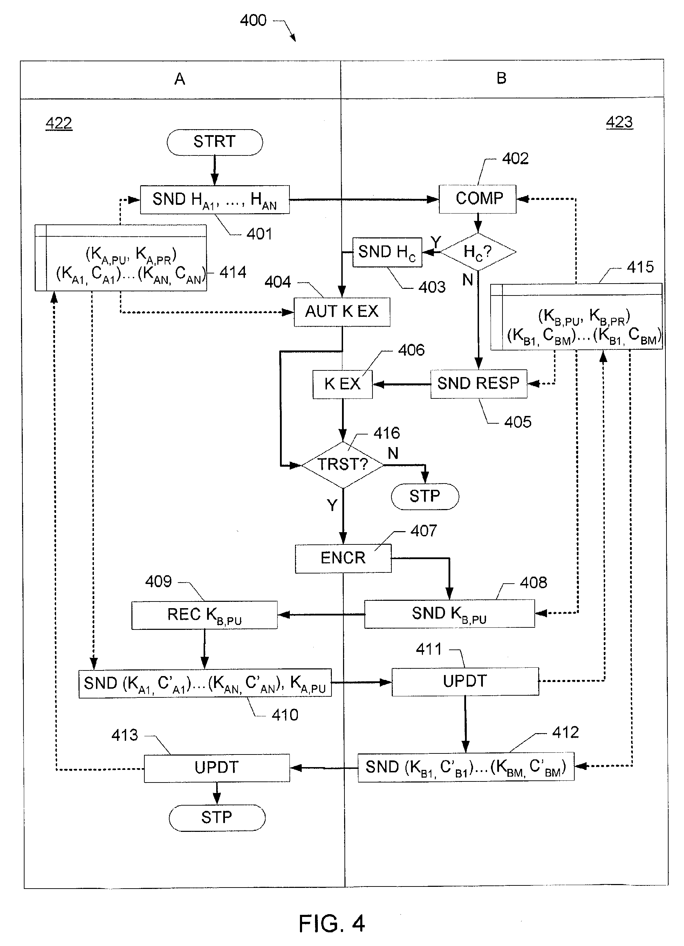

Fig. 4 shows a flow diagram illustrating the establishment of a secured peer-to-peer communications link between two communications devices using public-key based security associations. The flow diagram 400 comprises two columns 422 and 423, each column representing one of the two communications devices A and B, as described above.

Each of the communications devices A and B comprise an internal database of trusted public keys and certificates certifying the trusted public keys. The databases 414 and 415 each comprise lists of records, each record comprising a trusted public key and a corresponding chain of certificates. In the example of fig. 4, the public keys stored in database 414 of device A are denoted K_{A1}, ...,K_{AN}, and the corresponding chains of certificates are denoted C_{A1}, ..., C_{AN}, such that C_{A1} denotes a chain of one or more certificates linking the trusted public key K_{A1} to the public key of device A, and so forth. Similarly, the public keys stored in database 415 of device B are denoted K_{B1}, ...,K_{BM}, and the corresponding chains of certificates are denoted C_{B1}, ..., C_{BM}. Furthermore, the database 414 comprises at least one public and private key K_{A,PU} and K_{A,PR}, respectively, with a corresponding self signed certificate. Similarly, the database 415 of device B comprises at least one public and private key K_{B,PU} and K_{B,PR}, respectively, with a corresponding self-signed certificate. For example, during manufacturing, each device may be pre-configured with at least one public and private key and a self signed certificate where at least one of the public-private key pairs has signing capabilities. It is further understood that the devices may have stored further keys or certificates for other purposes. However, the present method applies to a dedicated set of trusted public keys K_{A1}, ...,K_{AN} and K_{B1}, ...,K_{BM}, respectively, and certificates C_{A1}, ..., C_{AN}, and C_{B1}, ..., C_{BM}, respectively, which are intended to be propagated to other trusted devices as a part of the present method. It is further understood that each public key may be related to a group identifier as described above.

In the following, the communications devices are assumed to be capable of communicating with each other via a wired or wireless communications medium, e.g. a cable, a radio channel, or any other suitable wireless technology. For example, the devices may communicate using a Bluetooth air interface. When a user would like to connect the two devices A and B for the first time, i.e. the two devices have not previously been in contact with each other, the following steps are performed:

In the initial step 401, device A sends a list of hash values H_{A1},...,H_{AN} corresponding to the public keys K_{A1},...,K_{AN} stored in the database 414 of device A to device B. The hash values H_{A1},...,H_{AN} may be stored in the database 414 as pre-calculated values in relation to the corresponding keys. Alternatively, device A may calculate the hash values from the stored keys prior to sending them.

The hash values may be calculated based on any suitable known hash function, e.g. SHA-1 or MD5. In general, a hash function for hash table lookup should be fast, and it should cause as few collisions as possible, i.e. few cases in which different keys result in the same hash value. It is noted, however, that if two different keys are erroneously indicated as a common key due to a conflict of their hash values, the subsequent establishment of security functions, such as encryption, based on these keys will fail. Hence, in this case an alternative key may be identified or, a manual pairing may be performed.

In step 402, device B compares the received list of hashes with the hashes of the keys K_{B1},... ,K_{BM} stored in database 415 of device B. If device B identifies a common hash value, if there is a H_{C} ∈ {H_{A1},...H_{AN}} ∩ {HASH(K_{B1}),...,HASH(K_{BM})}, the process continues at step 403, otherwise the process continues at step 405. If device B identifies more than one common hash value, an arbitrary one of the common hash values is selected.

In step 403, i.e. if a common hash value H_{c} was identified in step 402, device B sends the common hash value H_{c} to device A. In the following, the common public key corresponding to the hash value H_{c} will be denoted K_{c}.

In subsequent step 404, the two devices perform an authenticated key exchange resulting in a shared secret. The authentication is based on a certificate or public key that can be chained to the common public key K_{c}, i.e. the public key K_{c} is used as a public root key of a certificate chain. The authenticated key exchange may be performed according to any suitable known authenticated key exchange process based on a public key or certificate, e.g. IKEv2 or TLS.

In step 405, i.e. if no common hash value was identified in step 402, the device B informs device A that no common hash value was identified, e.g. by sending a corresponding response message or a request for a manual pairing.

In subsequent step 406, a key exchange is performed resulting in a shared secret. The key exchange may be initiated by device A, e.g. by sending a request for performing a pairing of the two devices In one embodiment, the user is prompted for acceptance and depending on the user's input, the request for pairing is accepted or rejected. If device B rejects the request, the process is terminated; otherwise, a pairing process including a key exchange is performed by the two devices. As part of the key exchange, a user interaction is requested by the devices. For example, the user(s) in control of the devices is/are asked to enter a passcode in both devices. In an alternative embodiment, a passcode is generated by one device and displayed to the user, and the user is asked to enter the generated passcode into the other device. The key exchange may be performed according to any suitable known password-based key exchange process. In one embodiment, the key exchange is performed according to the Bluetooth specification ("The Specification of the Bluetooth System, Core, Baseband Specification", ibid.).

As part of the key exchange process, the user is asked whether the devices A and B should proceed with the exchange of their respective security associations, i.e. whether the respective other device is regarded as a highly trusted device (step 416). If the user rejects the exchange of security associations, the process is completed, i.e. in this case, the two devices are paired and have established a shared secret, but without extending their previously established security associations to the respective other device. For example, the established shared secret may be used to protect the subsequent communication between the two devices, e.g. by establishing encryption and/or integrity protection and/or the like. In one embodiment, the exchange of security association may be limited to a certain group of security associations. For example, in an embodiment where each public key record further comprises a group identifier, the user may be asked to enter or select from a list one or more group identifiers. Subsequently, only security associations of the selected group identifiers are exchanged. If the user accepts the exchange of at least some security associations after completion of the key exchange step, the process continues at step 407.

In step 407, i.e. once a shared secret is established between the devices, either by an authenticated key exchange in step 404 authenticated on the basis of an existing common key K_{c}, or a passcode-based key-exchange in step 406 involving a user interaction, the devices switch to an encrypted connection using the agreed shared secret. The encryption may be based on any suitable encryption algorithm, such as E0 of Bluetooth1.1 or AES. In one embodiment, the communication between the devices is further integrity protected.

In step 408, device B sends its own public key K_{B,PU} or a self-signed certificate to device A.

In step 409, device A receives the public key of device B. Device A may choose to sign the public key of device B using its own private key.

Next, in step 410, device A sends a list of trusted public keys K_{A1},...,K_{AN} stored in the database 414, and corresponding certificates or certificate chains C'_{A1},...,C'_{AN} to device B. The certificates/certificate chains C'_{A1},...,C'_{AN} correspond to the certificates/certificate chains C_{A1},...,C_{AN} stored in database 414 but with the addition that they further certify the received public key K_{B,PU} of device B towards the trusted public keys K_{A1},...,K_{AN}, respectively. Furthermore, device A sends its own public key K_{A,PU} or self-signed certificate to device B. Since device A has previously received a list of hash values from device B, in one embodiment, device A may send only public keys from database 414 with hashes different from those previously received. If there are no difference in the two sets of trusted keys, device A may choose not to send any keys at all. If the set of trusted public keys was limited to only comprise keys related to one or more certain group identifier, only keys related to the selected group identifier(s) are sent. If neither device A nor device B have any trusted group keys stored in their databases, device A will make its own public key, a root key, and only send this key (or this key in a self-signed certificate) and the certificate that certifies the public key of device B against the root key to device B.

In step 411, device B receives the list of public keys and certificates/certificate chains from device A, and device B updates its list of trusted public keys and certificates that certify its own public key against the trusted keys. Device B may choose to sign the public key of device A using its own private key.

Next, in step 412, device B sends a list of trusted public keys K_{B1},...,K_{BM} stored in the database 415 and corresponding certificates/certificate chains C'_{B1},...,C'_{BM} that certify the received public key K_{A},_{PU} of device A against the trusted public keys K_{B1},...,K_{BM}, respectively. Since device B has previously received a list of hash values from device A, in one embodiment, device B may send only public keys from database 415 with hashes different from those previously received. If there are no difference in the two sets of trusted keys, device B may choose not to send any keys at all. If the set of trusted public keys was limited to only comprise keys related to one or more certain group identifier, only keys related to the selected group identifiers) are sent.

In step 413, device A receives the list of public keys and certificates/certificate chains from device B. Device A updates the list of trusted public keys and list of certificates that certify its own public key against the trusted keys.

Again, it is understood that the order of the key exchange steps 408-411 may be changed.

Hence, in the above, a procedure for establishing a security association between the devices A and B based on public keys was disclosed in which previously established security associations are propagated to the respective other device.

As mentioned above, the method described above reduces the number of pairings which require user interaction to a number between n-1 and n(n-1 )/2, depending on the order in which the devices are paired. In the following, this will be illustrated in connection with two examples of pairing scenarios for pairing five communications devices.

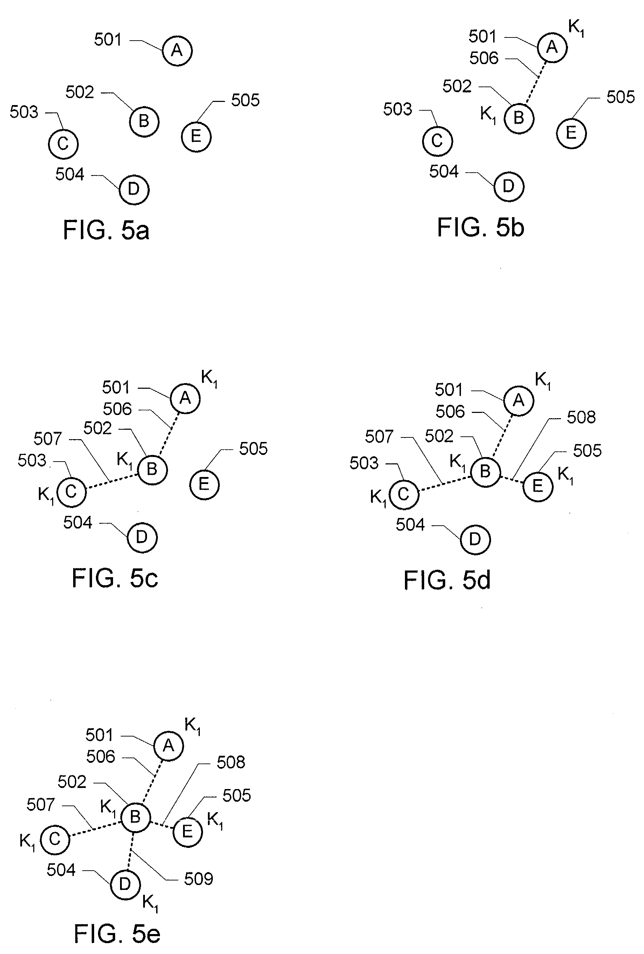

Figs. 5a-e illustrate a first example of a pairing scenario for pairing five communications devices. In this example, it is assumed that one or more users wish to establish security associations among five communications devices A, B, C, D, and E, generally designated 501, 502, 503, 504, and 505, respectively.

Fig. 5a illustrates the initial situation. In this example, it is assumed that none of the devices 501-505 is pre-configured with any group keys, i.e. none of the devices has any group keys stored in their respective lists of group keys.

Fig. 5b illustrates a first pairing step between devices 501 and 502. Devices 501 and 502 are connected for the first time. Since none of the devices has stored a group key, they perform a manual pairing based on a PIN or password as described above and as illustrated by the dotted line 506. After authentication and the switching to encryption, one of the devices generates a trusted group key K₁ and sends the generated key to the other device. Both devices store the trusted group key K₁ in their respective databases. It is understood that, in some embodiments, the key K₁ is stored in connection with a corresponding index, as described above.

Fig. 5c illustrates the situation after a subsequent connection of devices 501 and 503. Since the devices 501 and 503 do not have a common key, they perform a manual pairing based on a PIN or password entered into the two devices as indicated by dotted line 507. After authentication and switching to encryption, device 501 sends its list of trusted group keys, i.e. key K₁, to device 503 where the key K₁ is stored.

Fig. 5d illustrates the situation after a subsequent connection of devices 501 and 505. Again, devices 501 and 505 perform a manual pairing as indicated by dotted line 508, and device 501 sends its trusted group key K₁ to device 505 where the key K₁ is stored.

Fig. 5e illustrates the situation after a subsequent connection of devices 501 and 504. Again, devices 501 and 504 perform a manual pairing as indicated by dotted line 509, and device 501 sends its trusted group key K₁ to device 504 where the key K₁ is stored.

Hence, in this example, after four manual pairings, all five devices (n=5) have a common trusted group key with all other devices. Hence, the above procedure, where one device (device 502) is manually paired with all the other n-1 devices, is an example of a procedure requiring n-1 manual pairings.

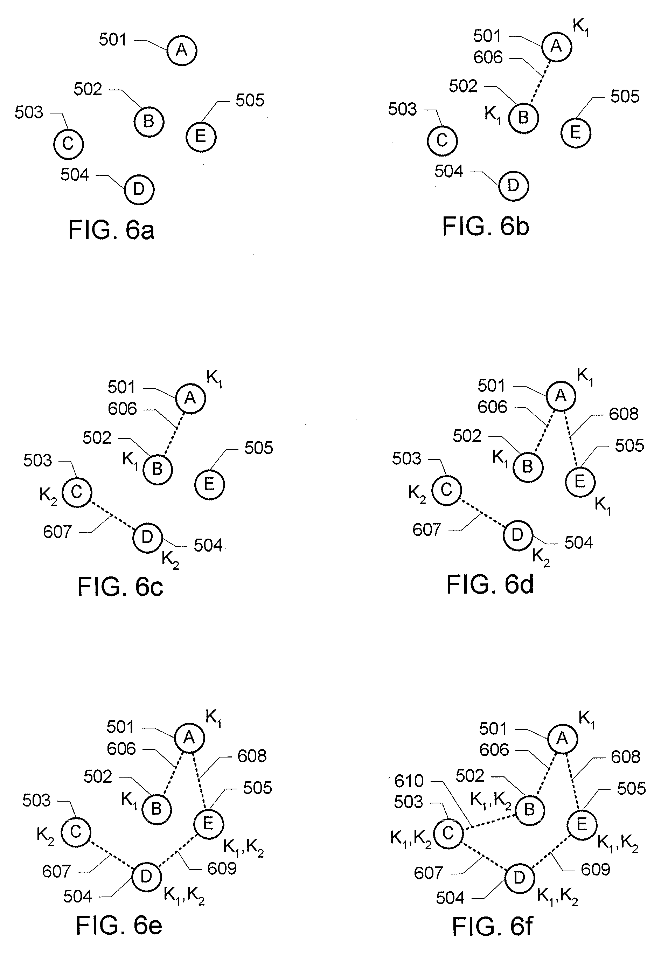

Figs. 6a-f illustrate a second example of a pairing scenario for pairing the above five communications devices. Again, it is assumed that one or more users wish to establish security associations among the five communications devices A, B, C, D, and E.

Fig. 6a illustrates the initial situation where none of the devices 501-505 is pre-configured with any group keys.

Fig. 6b illustrates a first pairing step between devices 501 and 502 including a manual pairing based on a PIN or password as described above and as illustrated by the dotted line 606. This pairing step and the subsequent exchange of security associations result in a key K₁ stored in both devices.

Fig. 6c illustrates the situation after a subsequent pairing step between devices 503 and 504. Since none of the devices has stored a group key, they perform a manual pairing based on a PIN or password as illustrated by the dotted line 607. After authentication and the switching to encryption, one of the devices generates a trusted group key K₂ and sends the generated key to the other device. Both devices store the trusted group key K₂ in their respective databases.

Fig. 6d illustrates the situation after a subsequent connection of devices 501 and 505. Again, devices 501 and 505 perform a manual pairing as indicated by dotted line 608, and device 501 sends its trusted group key K₁ to device 505 where the key K₁ is stored.

Fig. 6e illustrates the situation after a subsequent connection of devices 504 and 505. Before the connection, device 504 has only stored key K₂, while device 505 has only stored key K₁. Hence, the devices do not have a common key, and they perform a manual pairing as indicated by dotted line 609. Subsequently, the devices exchange their respective keys K₁ and K₂. Hence, as a result both keys K₁ and K₂ are now stored in both devices 504 and 505.

Finally, fig. 6f illustrates the situation after a subsequent connection of devices 502 and 503. Before the connection, device 502 has only stored key K₁, while device 503 has only stored key K₂. Hence, the devices do not have a common key, and they perform a manual pairing as indicated by dotted line 610. Subsequently, the devices exchange their respective keys K₁ and K₂. Hence, as a result both keys K₁ and K₂ are now stored in both devices 502 and 503.

Hence, in this example, after five manual pairings, all five devices (n=5) have at least one common trusted group key with all other devices. Hence, the above procedure is an example of a procedure requiring more than n-1 but less than n(n-1 )/2 manual pairings.

It is understood that in the embodiments described above, two devices may exchange their respective list of group keys more than once. For example, when two devices that have previously exchanged their lists of group keys are connected again in a subsequent session, they may exchange their respective lists of trusted group keys again. During the time after the first connection of the two devices, one or both of the devices may have extended their respective lists of group keys due to pairings with one or more other devices. These extensions may be propagated to the corresponding other one of the two devices when they are connected again, thereby improving the efficiency of the key distribution and the probability that there is at least one common security association available if one of the devices connects to a new device for the first time. Thus, in one embodiment, the devices exchange their lists of security associations every time they are connected, and they extend their respective lists with new security associations, if any, from the list of the respective other device.

It should be emphasized that the term "comprises/comprising" when used in this specification is taken to specify the presence of stated features, integers, steps or components but does not preclude the presence or addition of one or more other features, integers, steps, components or groups thereof.

Although preferred embodiments of the present invention have been described and shown, the invention is not restricted to them, but may also be embodied in other ways within the scope of the subject matter defined in the following claims. For example, even though the invention has mainly been described in connection with wireless communications technology, the invention may also be applied to wired communications scenarios.

## Claims

1. A method of establishing a secured peer-to-peer communication between a first (A) and a second (B) communications device via a communications link, each communications device having stored a respective set of previously established security associations (214,215) between the corresponding communications device and other communications devices; the method comprising
- determining (201,202; 401,402) whether the first and second communications devices have a common security association in their respective sets of established security associations;
- if the first and the second communications device have determined a common security association (K_{IC}, K_{C}), protecting (204,207; 404,407) said communications link between the first and second communications device based on the determined common security association; otherwise establishing (206; 406) a new security association between the first and second communications devices, and protecting (207; 407) the communications link based on the new security association; and
- extending (208,209,210,211; 408,409,410,411,412,413) the sets of previously established security associations of the first and second communications devices to the corresponding other one of the first and second communications devices by communicating corresponding key data via the protected communications link.

2. A method according to claim 1, wherein the step of establishing a new security association between the first and second communications devices comprises receiving a user-input by at least one of the first and second communications devices, the user-input indicating whether the corresponding other communications device is a trusted device; and wherein the step of extending said set of previously established security association is only performed if the received user-input has indicated the corresponding other communications device to be a trusted device.

3. A method according to claim 1 or 2, wherein each previously established security association of the set of previously established security associations of one of the first and second communications devices is stored in relation to a group identifier identifying a predetermined group of communications devices; and wherein the step of extending the previously established security associations is limited to previously established security associations related to a predetermined group identifier.

4. A method according to any one of claims 1 through 3, wherein the security association is based on a symmetric-key security mechanism.

5. A method according to claim 4, wherein the set of previously established security associations comprises a set of corresponding private keys each private key being stored in relation to a corresponding private key index.

6. A method according to claim 5, wherein the step of determining whether the first and second communications devices have a common security association comprises sending (201) at least a first private key index from one of the first and second communications devices to the corresponding other communications device, and comparing (202) the first private key index with at least one private key index stored by the other communications device; and wherein the step of extending the sets of previously established security associations comprises sending (210) at least a private key and a corresponding private key index from the first to the second device.

7. A method according to claim 5 or 6, comprising
- communicating (201) a number of private key indices from the first to the second communications device, each private key index identifying a corresponding one of the private keys stored by the first communications device;
- comparing (202) the received number of private key indices with the private key indices stored by the second communications device to identify an existing common private key;
- if an existing common private key is identified, performing (204) an authenticated key exchange based on the existing common private key to establish a common secret key; otherwise performing (206) a key exchange including a user interaction to establish the common secret key;
- protecting (207) the communications link using the established common secret key;
- sending (210) a first number of private keys and corresponding private key indices from the first to the second communications device; and updating (211) the set of previously established security associations of the second communications device with the first number of received private keys and private key indices;
- sending (208) a second number of private keys and corresponding private key indices from the second to the first communications device; and updating (209) the set of previously established security associations of the first communications device with the second number of received private keys and private key indices.

8. A method according to any one of claims 1 trough 3, wherein the security association is based on a public-key security mechanism and the set of previously established security associations comprises a set of previously established public keys and corresponding certificate chains, each certificate chain comprising at least one certificate.

9. A method according to claim 8, wherein the step of determining whether the first and second communications devices have a common security association comprises sending (401) at least a first data item identifying at least a first public key from one of the first and second communications devices to the corresponding other communications device, and comparing (402) the first data item with at least one data item identifying at least one public key stored by the other communications device; and wherein the step of extending a previously established security association comprises sending (410) a corresponding public key and a corresponding certificate chain from the first to the second device.

10. A method according to claim 8 or 9, comprising
- communicating (401) a number of data items from the first to the second communications device, each data item identifying a corresponding one of the public keys stored by the first communications device;
- comparing (402) the received number of data items with corresponding data items identifying the public keys stored by the second communications device to identify an existing common public key;
- if an existing common public key is identified, performing (404) an authenticated key exchange based on the existing common public key to establish a common secret key; otherwise performing (406) a key exchange including a user interaction to establish the common secret key;
- protecting (407) the communications link using the established common secret key;
- sending (408) a first public key of the second device from the second device to the first device;
- sending (410) a first number of public keys and a first number of certificate chains from the first to the second communications device, each of the first number of certificate chains certifying the received first public key with respect to a corresponding one of the first number of public keys;
- updating (411) the set of previously established security associations of the second communications device with the first number of received public keys and corresponding certificate chains;
- sending (410) a second public key of the first device from the first device to the second device;
- sending (412) a second number of public keys and a second number of certificate chains from the second to the first communications device, each of the second number of certificate chains certifying the received second public key with respect to a corresponding one of the second number of public keys;
- updating (413) the set of previously established security associations of the first communications device with the second number of received public keys and corresponding certificate chains.

11. A communications device (101) facilitating peer-to-peer communication with other such communications devices of a communications system, the communications device comprising storage means (104) for storing a set of previously established security associations between the corresponding communications device and other communications devices; communications means (103) for communicating via a communications link (105) with another communications device; and processing means (102) adapted to perform the following steps
- determining whether the communications device has a common security association in the set of established security associations, the common security association corresponding to a security association of the another communications device;
- if the communications device has determined a common security association, protecting the communications link based on the determined common security association; otherwise establishing a new security association with the another communications device, and protecting the communications link based on the new security association; and
- extending the set of previously established security associations to the another communications device by communicating corresponding key data via the protected communications link.

12. A computer program adapted, when run on a processing means of a communications device, the communications device facilitating peer-to-peer communication with other such communications devices of a communications system, the communications device comprising storage means for storing a set of previously established security associations between the corresponding communications device and other communications devices; communications means for communicating via a communications link with another communications device; and the processing means, to perform the following steps
- determining whether the communications device has a common security association in the set of established security associations, the common security association corresponding to a security association of the another communications device;
- if the communications device has determined a common security association, protecting the communications link based on the determined common security association; otherwise establishing a new security association with the another communications device, and protecting the communications link based on the new security association; and
- extending the set of previously established security associations to the another communications device by communicating corresponding key data via the protected communications link.
